# EUROPEAN PATENT APPLICATION

(11) **EP 3 128 753 A1**
(43) Date of publication of application: **08.02.2017**
(21) Application number: 16180515.5
(22) Date of filing: 21.07.2016
(51) Int. Cl.: H04N 19/136, H04N 19/134, H04N 19/102, H04N 19/115, H04N 19/137, H04N 19/147

(54) **VIDEO PROCESSING METHOD AND VIDEO PROCESSING DEVICE**

(30) Priority: 05.08.2015 CN 201510474329
(71) Applicant: Sercomm Corporation, Taipei 115 (TW)
(72) Inventor: Zhao, Shao-Hai, Suzhou, 215021 (CN); Yang, Ya-Min, Suzhou, 215021 (CN)
(74) Representative: dompatent von Kreisler Selting Werner - Partnerschaft von Patent- und Rechtsanwälten mbB

(57) **Abstract**

A video processing method and a video processing device are provided. The video processing method includes the following steps: A raw video is obtained. A noise level of the raw video is obtained. A bit rate or a resolution is adjusted according to the noise level. The raw video is compressed according to the bit rate and the resolution.

## Description

### BACKGROUND

### Technical Field

The disclosure relates in general to a processing method and a processing device, and more particularly to a video processing method and a video processing device.

### Description of the Related Art

Along with the development of technology, various video devices are invented. For example, web cams, video cameras of cell phones, and video conferencing equipment are widely used in daily life and work.

When those video devices are operated, light and scenery may be changed frequently and the changes of the light and the scenery cannot be predicted in advance. Therefore, if a raw video is compressed by a fixed way, then the quality of the compressed video may be unstable.

In response to the changes of the light and the scenery, "Constant Bit Rate/Flexible Quality" or "Variable Bit Rate/Fixed Quality" is used in compression. In "Constant Bit Rate/Flexible Quality", a Constant Bit Rate is used in static scene and dynamic scene. However, in the static scene, the bit rate may be too high for enough quality. Therefore, if "Constant Bit Rate/Flexible Quality" is used in the static scene, the transmission load is high and is not properly reduced.

In "Variable Bit Rate/Fixed Quality", the bit rate can be changed according to the scenes. However, the range of the bit rate is not controlled to be within a limited range, so the bit rate may be too high in the dynamic scene. Therefore, the transmission load is not properly controlled.

Thus, there is a need to develop a video processing method and a video processing device that can stabilize the quality and reduce the transmission load.

### SUMMARY

The present disclosure provides a video processing method and a video processing device which can stabilize the quality and reduce the transmission load.

According to one aspect of the present disclosure, a video processing method is provided. The video processing method includes the following steps: A raw video is obtained. A noise level of the raw video is obtained. A bit rate or a resolution is adjusted according to the noise level. The raw video is compressed according to the bit rate and the resolution.

According to another aspect of the present disclosure, a video processing device is provided. The video processing device includes a capturing unit, a noise analyzing unit, an adjusting unit, and a compressing unit. The capturing unit is for capturing a raw video. The noise analyzing unit is for obtaining a noise level of the raw video. The adjusting unit is for adjusting a bit rate or a resolution according to the noise level. The compressing unit is for compressing the raw video according to the bit rate and the resolution.

The above and other aspects of the disclosure will become better understood with regard to the following detailed description of the non-limiting embodiments. The following description is made with reference to the accompanying drawings.

### BRIEF DESCRIPTION OF THE DRAWINGS

Fig. 1 shows a video processing device.
Fig. 2 shows a flow chart of a video processing method according to one embodiment.
Fig. 3 shows another video processing device.
Fig. 4 shows a flowchart of a video processing method according to another embodiment.
Fig. 5 shows another video processing device.
Fig. 6 shows a flowchart of a video processing method according to another embodiment.

### DETAILED DESCRIPTION

The structure and the operation in the present invention are illustrated with drawings.

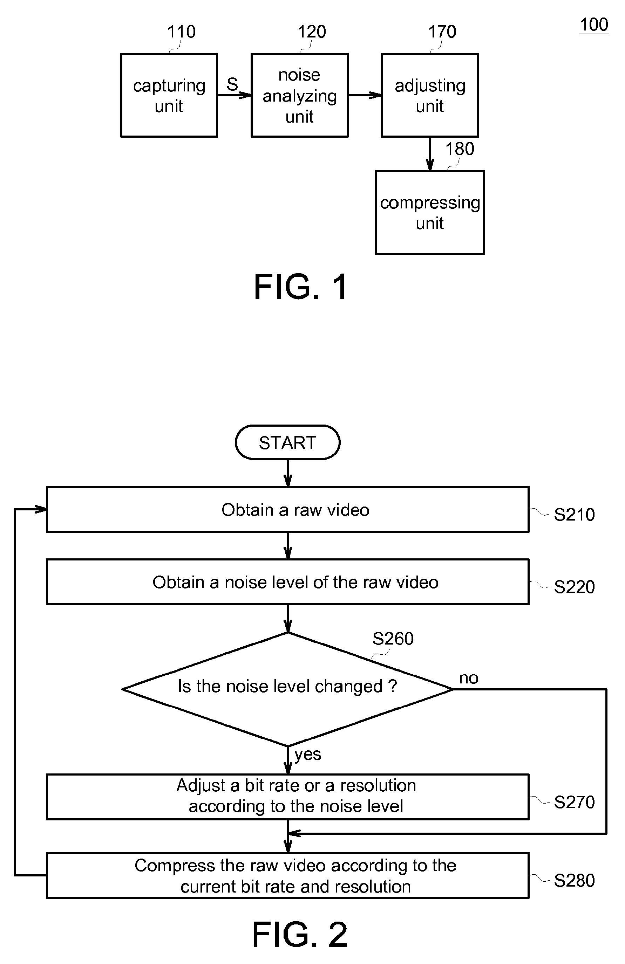

Please refer to Fig. 1, which shows a video processing device 100. The video processing device 100 includes a capturing unit 110, a noise analyzing unit 120, an adjusting unit 170 and a compressing unit 180. The capturing unit 110 is used for obtaining a raw video S. For example, the raw video S may be a video captured in real time, a video stored in a hard disk or a video transmitted from a remote end via the network. The capturing unit 110 may be an image sensor, a real time video camera, a network transmission module or a hard disk.

The noise analyzing unit 120 is for analyzing the raw video S to obtain a noise level of the raw video S. The adjusting unit 170 is for adjusting a video compression procedure according to the type of scene. The compressing unit 180 is for performing the video compression procedure. The noise analyzing unit 120, the adjusting unit 170 and the compressing unit 180 can be a chip, a circuit board or a storage device storing a plurality of codes.

The video processing device 100 can be a web cam, a personal computer, a cloud processing system or a video processing chip. The video processing device 100 is not limited to be a single device. The video processing device 100 can be an assembly of a plurality of devices located at different locations.

Please refer to Fig. 2, which shows a flow chart of a video processing method according to one embodiment. Firstly, in step S210, the capturing unit 110 obtains the raw video S. In this step, the raw video S can be a video captured by the video camera or image sensor in real time, a video stored in a hard disk or a video transmitted from a remote end via the network. Moreover, the format of the raw video S in the video processing method is not limited. For example, the raw video S can be a YUV video or a RGB video.

In step S220, the noise analyzing unit 120 obtains a noise level of the raw video S. In this step, the noise analyzing unit 120 can directly obtain the noise level of the raw video S from an auto white balance module or an auto exposure module. Alternatively, the noise analyzing unit 120 can obtain the noise level of the raw video S by performing an algorithm, such as a wavelet analysis algorithm, a KNN algorithm, or a genetic algorithm. In one embodiment, the noise analyzing unit 120 classifies the noise level into "no to very low noise", "low noise" and "high noise."

In step S260, the adjusting unit 170 determines whether the noise level is changed or not. Along with the change of the senses, the noise level of the raw video S may be increased or reduced. If the noise level is changed, then the process proceeds to step S270. If the noise level is not changed, then the step S270 is skipped and the process proceeds to step S280.

In step S270, the adjusting unit 170 adjusts a bit rate or a resolution according to the noise level. In the present embodiment, both of the bit rate and the resolution may be adjusted according to the noise level. Instead of "Constant Bit Rate/Flexible Quality", in the present embodiment, the bit rate is flexible to prevent the resolution from exceeding an acceptable range. Moreover, instead of "Variable Bit Rate/Fixed Quality", in the present embodiment, the resolution is also flexible to prevent the bit rate from exceeding an acceptable range.

Please refer to table I. If the noise level is low, then the resolution can be low. If the noise level is high, then the resolution can be high without reducing the bit rate.

**Table I**

| noise level | bit rate | resolution |
|---|---|---|
| no to very low noise | middle | middle |
| low noise | middle | middle |
| high noise | middle | high |

In another embodiment, in addition to the table I, a weighting/ratio algorithm can be used to calculate the bit rate and the resolution. The noise level can be an input of the weighting/ratio algorithm and the bit rate and the resolution can be two inputs of the weighting/ratio algorithm.

In step S280, the compressing unit 180 compresses the raw video S according to the current bit rate and resolution, one or both of which may have been adjusted. Then, the raw video S is continued to be inputted, and the steps S210 to S280 are performed repeatedly. When the sense of the raw video S is changed, the bit rate and/or the resolution can be adjusted immediately. As such, the quality can be stabilized and the transmission load can be reduced.

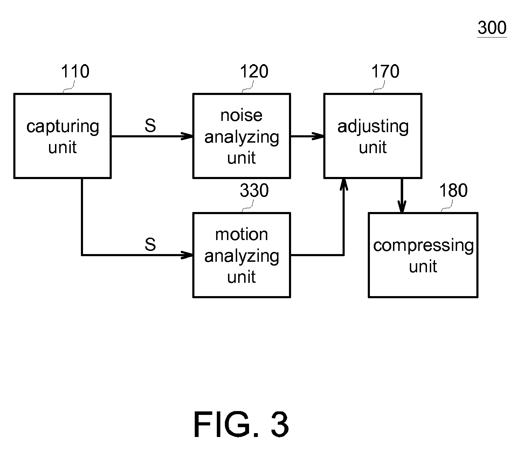

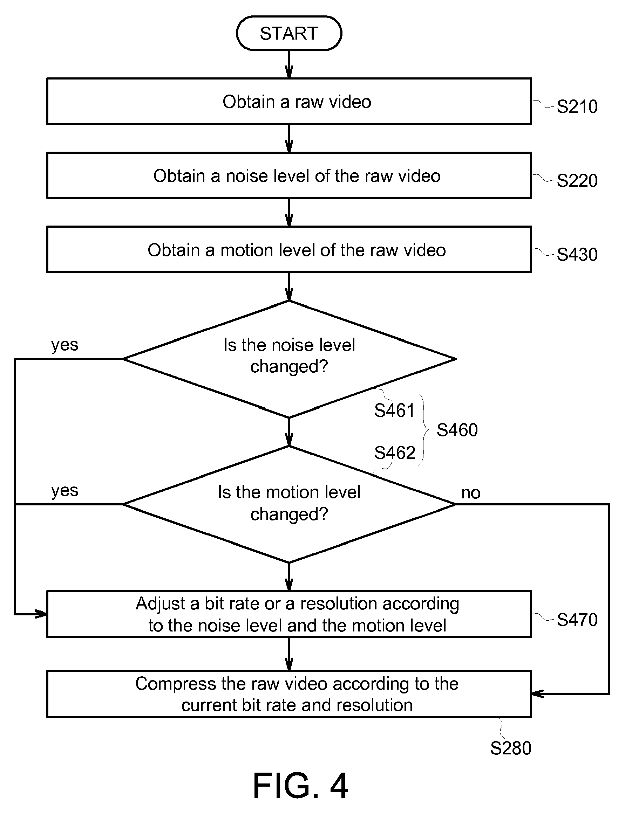

Please refer to Figs. 3 to 4. Fig. 3 shows a video processing device 300. Fig. 4 shows a flowchart of a video processing method according to another embodiment. In this embodiment, the video processing device 300 further includes a motion analyzing unit 330. In step S430, the motion analyzing unit 330 obtains a motion level of the raw video S. The motion analyzing unit 330 can obtain the motion level of the raw video S by performing an algorithm, such as an edge detection algorithm or a block matching algorithm. In one embodiment, the motion analyzing unit 330 can classify the motion level into "no to very low motion", "low motion", "medium motion" and "high motion."

In step S460, the step S460 includes steps S461 and S462. In step S461, the adjusting unit 170 determines whether the noise level is changed or not. In step S462, the adjusting unit 170 determines whether the motion level is changed or not. Along with the change of the scenes, the noise level or the motion level of the raw video S may be increased or decreased. If the noise level or the motion level is changed, then the process proceeds to step S470. If both of the noise level and the motion level are not changed, then the step S470 is skipped and the process proceeds to step S280.

In step S470, the adjusting unit 170 adjusts the bit rate or the resolution according to the noise level and the motion level. In this embodiment, both of the bit rate and the resolution can be adjusted.

Please refer to table II. If the motion level is low, then the bit rate can be low. If the motion level is high, then the bit rate can be high without reducing the resolution. If the noise level is high, then the resolution can be high without reducing the bit rate.

**Table II**

| motion level | noise level | bit rate | resolution |
|---|---|---|---|
| no to very low motion | no to very low noise | ultra low | medium |
| no to very low motion | low noise | ultra low | medium |
| no to very low motion | high noise | ultra low | high |
| low motion | no to very low noise | low | medium |
| low motion | low noise | low | medium |
| low motion | high noise | low | high |
| medium motion | no to very low noise | medium | medium |
| medium motion | low noise | medium | medium |
| medium motion | high noise | medium | high |
| high motion | no to very low noise | high | medium |
| high motion | low noise | high | medium |
| high motion | high noise | high | high |

In another embodiment, in addition to the table II, a weighting/ratio algorithm can be used to calculate the bit rate and the resolution. The noise level and the motion level are two inputs of the weighting/ratio algorithm and the bit rate and the resolution are two inputs of the weighting/ratio algorithm.

In step S280, the compressing unit 180 compresses the raw video S according to the current bit rate and resolution, one or both of which may have been adjusted. Then, the raw video S is continued to be inputted, and the steps S210, S220, S430, S460, S470 and S280 are performed repeatedly.

As such, when the motion level is low, the bit rate can be low without reducing the quality. When the motion level is high, the bit rate can be controlled to be within an acceptable range without reducing the quality.

By adjusting the bit rate and the resolution, the bit rate can be controlled to be low at the static scene and can be controlled to be within the acceptable range at the dynamic scene. It is useful for some equipment which is operated at a limited transmission load.

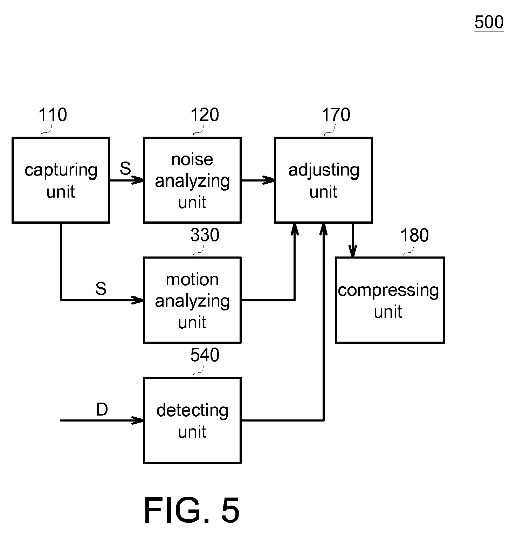

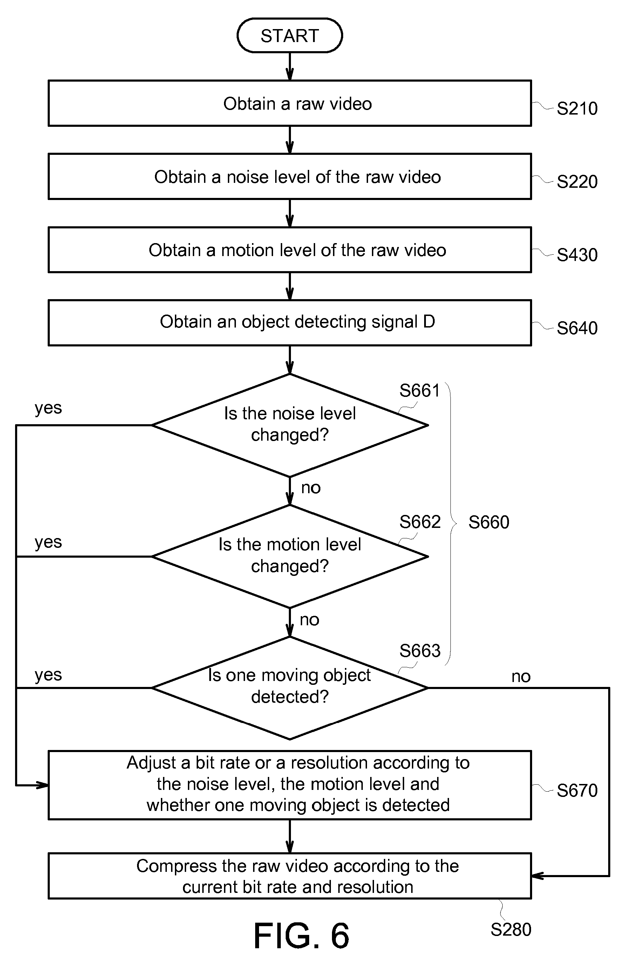

Please refer to Figs. 5 to 6. Fig. 5 shows a video processing device 500. Fig. 6 shows a flowchart of a video processing method according to another embodiment. In this embodiment, the video processing device 500 further includes a detecting unit 540. In step S640, the detecting unit 540 obtains an object detecting signal D. The detecting unit 540 detects a moving object in the real environment instead of analyzing the raw video S. For a surveillance device, when one moving object is detected, it is needed to capture the video with high quality. For example, the detecting unit 540 can be a passive infrared sensor (PIR sensor), a sonar sensor, or a radar sensor. In step S660, step S660 includes steps S661 to S663. In step S661, the adjusting unit 170 determines whether the noise level is changed. In step S662, the adjusting unit 170 determines whether the motion level is changed. In step S663, the adjusting unit 170 determines whether one moving object is detected. If any of the determinations of the steps S661 to S663 is "yes", then the process proceeds to step S670. If the all of the determinations of the steps S661 to S663 are "no", then the step S670 is skipped and the process proceeds to step S280.

In step S670, the adjusting unit 170 adjusts the bit rate and/or the resolution according to the noise level, the motion level and whether one moving object is detected. In this embodiment, both of the bit rate and the resolution can be adjusted.

Please refer to table III. If the motion level is low, then the bit rate can be low. If the motion level is high, then the bit rate can be high without reducing the resolution. If the noise level is high, then the resolution can be high without reducing the bit rate. If one moving object is detected, then both of the bit rate and the resolution can be high to clearly record the invader.

**Table III**

| Whether one moving object is detected | motion level | noise level | bit rate | resolution |
|---|---|---|---|---|
| No | no to very low motion | no to very low noise | ultra low | medium |
| No | no to very low motion | low noise | ultra low | medium |
| No | no to very low motion | high noise | ultra low | high |
| No | low motion | no to very low noise | low | medium |
| No | low motion | low noise | low | medium |
| No | low motion | high noise | low | high |
| No | medium motion | no to very low noise | medium | medium |
| No | medium motion | low noise | medium | medium |
| No | medium motion | high noise | medium | high |
| No | high motion | no to very low noise | high | medium |
| No | high motion | low noise | high | medium |
| No | high motion | high noise | high | high |
| Yes | no to very low motion | no to very low noise | low | high |
| Yes | no to very low motion | low noise | low | high |
| Yes | no to very low motion | high noise | low | high |
| Yes | low motion | no to very low noise | medium | high |
| Yes | low motion | low noise | medium | high |
| Yes | low motion | high noise | medium | high |
| Yes | medium motion | no to very low noise | high | high |
| Yes | medium motion | low noise | high | high |
| Yes | medium motion | high noise | high | high |
| Yes | high motion | no to very low noise | high | high |
| Yes | high motion | low noise | high | high |
| Yes | high motion | high noise | high | high |

In another embodiment, a weighting/ratio algorithm can be used to calculate the bit rate and the resolution. The noise level, the motion level and whether one moving object is detected are inputs of the weighting/ratio algorithm and the bit rate and the resolution are two inputs of the weighting/ratio algorithm.

While the disclosure has been described by way of example and in terms of the exemplary embodiments, it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A video processing method, **characterized in that** the video processing method comprises:
obtaining a raw video (S);
obtaining a noise level of the raw video (S);
adjusting a bit rate or a resolution according to the noise level; and
compressing the raw video (S) according to the bit rate and the resolution.

2. The video processing method according to claim 1, wherein in the step of adjusting the bit rate or the resolution, both of the bit rate and the resolution are adjusted.

3. The video processing method according to claim 1, further comprising:
determining whether the noise level is changed; and
adjusting the bit rate or the resolution if the noise level is changed.

4. The video processing method according to claim 1, further comprising:
obtaining a motion level of the raw video;
wherein in the step of adjusting the bit rate or the resolution, the bit rate or the resolution is adjusted according to the noise level and the motion level.

5. The video processing method according to claim 1, further comprising:
obtaining an object detecting signal;
wherein in the step of adjusting the bit rate or the resolution, the bit rate or the resolution is adjusted according to the noise level and the object detecting signal.

6. A video processing device, **characterized in that** the video processing device comprises:
a capturing unit (110) for capturing a raw video (S);
a noise analyzing unit (120) for obtaining a noise level of the raw video (S);
an adjusting unit (170) for adjusting a bit rate or a resolution according to the noise level; and
a compressing unit (180) for comprising the raw video (S) according to the bit rate and the resolution.

7. The video processing device according claim 6, wherein the adjusting unit is for adjusting both of the bit rate and the resolution.

8. The video processing device according to claim 6, wherein the adjusting unit is further for determining whether the noise level is changed, and the adjusting unit adjusts the bit rate or the resolution if the noise level is changed.

9. The video processing device according to claim 6, further comprising:
a motion analyzing unit for obtaining a motion level of the raw video, wherein the adjusting unit is for adjusting the bit rate or the resolution according to the noise level and the motion level.

10. The video processing device according to claim 6, further comprising:
a detecting unit for obtaining an object detecting signal, wherein the adjusting unit is for adjusting the bit rate or the resolution according to the noise level and the object detecting signal.
